Europäisches Patentamt

European Patent Office

Office européen des brevets

(11) Publication number: **0 453 999 A2**

## EUROPEAN PATENT APPLICATION

(21) Application number: 91106370.9

(22) Date of filing: 19.04.91

(51) Int. Cl.⁵: **C08L 23/06**, C08L 25/06, C08F 255/00, //(C08F255/00, 212:08)

(30) Priority: 23.04.90 US 512720
23.04.90 US 512721

(43) Date of publication of application:
30.10.91 Bulletin 91/44

(84) Designated Contracting States:
DE ES FR GB IT NL SE

(71) Applicant: HERCULES INCORPORATED
Hercules Plaza
Wilmington Delaware 19894-0001(US)

(72) Inventor: Klosiewicz, Daniel William
2 Ocheltree Drive, Woodcreek
Wilmington, Delaware 19808(US)
Inventor: Shih, Keith Shann
4838 Weatherhill Drive, Weatherhill Farms
Wilmington, Delaware 19808(US)

(74) Representative: Lederer, Franz, Dr. et al
Lederer, Keller & Riederer, Patentanwälte,
Lucile-Grahn-Strasse 22
W-8000 München 80(DE)

(54) Ultra high molecular weight polyethylene/styrene moulding compositions with improved flow properties and impact strength.

(57) A method for making molded articles comprising ultra-high-molecular-weight polyethylene (UHMWPE), that includes the steps of dispersing 35 to 80% of particles of UHMWPE in in a liquid styrene monomer that also contains a catalytic amount of a free radical vinyl polymerization catalyst, charging the mixture into a mold, and heating the mold to a temperature sufficient to cause the UHMWPE to dissolve in said monomer and then to cause the styrene monomer to polymerize to a solid polymer.

Rank Xerox (UK) Business Services

This invention relates to a method of preparing abrasion-resistant materials containing ultra-high-molecular-weight polyethylene and to the products of the method.

Ultra-high-molecular-weight polyethylene (UHMWPE), a high density polyethylene having a molecular weight ranging from about 1.5 million to about 6 million as measured by viscosimetric methods, is a commercially available material having some very attractive properties. It has very high impact strength, high abrasion resistance, a low coefficient of friction and chemical inertness. However, the commercial exploitation of these properties has been hampered by the fact that UHMWPE is extremely difficult to form by conventional molding methods.

Most shaped UHMWPE articles are currently made by machining the shape from molded bars or billets, as in metal fabrication. The bars and billets are usually made by sintering of particulate polymer at very high temperatures and pressures, on the order of about 1200 to 1500 psi and 160 to 200°C. The sintering technique is also used to form finished shaped articles, but it also is unsatisfactory because the time and energy required to prepare a molded object make its use commercially impractical. Moreover, complex shapes are virtually impossible to make.

U.S. Patent 3,911,051 to Schouten et al teaches an UHMWPE composition suitable for molding, which comprises a blend of UHMWPE and a highly unsaturated, crosslinkable hydrocarbon rubber binder, such as a copolymer of butadiene and styrene, along with a crosslinker to crosslink the binder phase and optionally up to 10 parts by weight of a cross-linking monomer such as styrene. The product appears to be a dispersion of particulate UHMWPE in a rubber matrix, particularly since the description refers to "some instances" in which the surfaces of the particles may be cross-linked to the binder.

European Patent Application 277,750 teaches processing of UHMWPE by dispersing it in an intimate mixture with a "flowability improver", preferably an aliphatic hydrocarbon having a melting point 20 to 70°C below that of UHMWPE. The dispersion is melt extruded at a temperature above the melting point of UHMWPE, and before, during, or after a stretching step, the flowability improver is removed.

U.S Patent 4,952,625 discloses a process for making molded UHMWPE articles by feeding the UHMWPE particles, together with a liquid monomer "flowability improver", into a twin-screw extruder to form a sheet or into a mold for compression molding. The monomer may be styrene or alpha-methyl styrene. The process apparently does not involve dissolution of the particles in the "flowability improver" and calls for relatively high processing temperatures that would melt the UHMWPE. The products contain very high amounts of residual monomer, which can require many hours for vacuum stripping down to a satisfactory level.

There is a need for a method for making molded UHMWPE articles with commercially acceptable levels of residual monomer, as well as the high levels of impact strength, high abrasion resistance, and other desirable properties associated with UHMWPE articles, and which can be readily formed by thermal techniques at relatively low temperatures and pressures.

According to the invention, a method for making molded articles comprising ultra-high-molecular-weight polyethylene (UHMWPE), that includes the steps of mixing particulate UHMWPE with a liquid styrene monomer, charging the mixture into a heated mold, and polymerizing the monomer, is characterized in that the mixture is a dispersion of about 35 to 80% of particles of UHMWPE in 65 to 20% of the styrene monomer, and also contains a catalytic amount of a free radical vinyl polymerization catalyst, and the mold is heated to a temperature sufficient to cause the UHMWPE to dissolve in said monomer and then to cause the styrene monomer to polymerize to a solid polymer. Optionally, the styrene monomer can include within the said proportions up to about 10% based on the weight of the total monomer phase of at least one other free radical vinyl polymerizable monomer.

Any of the known heat-activated free radical catalysts can be used, provided that the activation does not take place below about 130°C. Preferred catalysts are organic peroxides such as t-butyl cumyl peroxide, dicumyl peroxide or dibutyl peroxide. It is also possible to use a mixture of high- and low-temperature-decomposing peroxides. The amount of catalyst required is a conventionally recognized catalytic amount, such as about 0.2 to 1% by weight, based on the weight of styrene monomer (or mixed monomers) in the system. Amounts lower or greater than conventional catalytic amounts can be used, but it is well known that lower amounts require longer cure time, while greater amounts offer no advantage.

When the UHMWPE/styrene monomer slurry is charged to a mold and heat is applied, the UHMWPE dissolves in the styrene monomer at a temperature of about 120 to 125°C, forming a gel. This dissolution is apparent as an endotherm indication on a calorimetric scan curve produced by differential scanning calorimetry (DSC), which can occur between 120 and 125°C. Dissolution takes place prior to occurrence of any significant amount of polymerization. When the temperature is increased to about 155 to 165°C, polymerization of the styrene monomer and crosslinking of the components is initiated and forms an interpenetrating network of UHMWPE and styrene polymer.

Preferably, the mixture also contains a crosslinking monomer that has more than one point of free-radical-polymerizable vinyl unsaturation in a molecule. With that addition, when the temperature is increased to about 155 to 165°C, both polymerization of the styrene monomer and crosslinking are initiated, leading to formation of an interpenetrating network of UHMWPE and crosslinked styrene polymer.

Crosslinking monomers that can be used in the alloy compositions of this invention include, for example, divinyl benzene, diisopropenyl benzene, diallyl benzene, diallyl phthalate, vinyl norbornene, trimethylolpropane trimethacrylate, tetraethyleneglycol dimethacrylate, and vinyl acrylate. If the crosslinking monomer is intended to effect crosslinking only, the preferable amount is about 0.1 to 8%, and more preferably about 0.1 to 4%. Most preferably, since in an amount greater than such crosslinking amounts the crosslinking monomer becomes in effect a comonomer that can significantly reduce the cure time of the compositions, the amount of crosslinking monomer is from 4 to to 50%. The preferred crosslinking monomer is divinyl benzene, because it has a structural similarity to styrene.

The UHMWPE used in this invention is a nominally-thermoplastic polymer of ethylene having a molecular weight of about 1.5 to 6 million, as measured by viscosimetric methods. (Hereinafter, all references to "polyethylene" are intended to refer to UHMWPE). It has a melting point of about 140°C, and exhibits melt properties more closely resembling those of a crosslinked material than a thermoplastic. At the melting point, particles can be deformed, but the polymer does not flow freely in the sense generally associated with thermoplastics. That is the reason why, as pointed out above, it is extremely difficult to thermoform these materials by, for instance, injection or compression molding.

To charge the UHMWPE to a mold for forming, in accordance with this invention, the particulate polymer is suspended in a styrene monomer to make a flowable slurry in which the void space between the polymer particles may be occupied by the liquid monomer, so that the layer of liquid between the particles provides sufficient lubricity for the slurry to be pumped into the mold. However, the term "flowable" is not meant to be limited to "pumpable". A slurry can be regarded as flowable even though its viscosity is such that it cannot readily be pumped, if it can be forced into a mold and can then be made to assume the shape of the mold by applying compressive pressure.

As would be expected, the slurry viscosity increases as the UHMWPE content increases. Generally speaking, in the absence of a cross-linking monomer, slurries of less than about 50% polyethylene have excellent flow properties and can be referred to as pumpable, but at levels above about 55% polyethylene its flow properties are decreased and it may cease to be pumpable while still being "flowable". If a cross-linking monomer is included, a slurry containing 79 to 80% UHMWPE can still be molded under pressure, although it may be dry to the touch and have ceased to be pumpable.

At all concentration levels flow properties are better with the relatively larger particles of polyethylene. Commercially, UHMWPE is available in a variety of particle sizes, ranging from material of which 85% is less than 75 micrometers to material of which 94 to 98% is greater than 180 micrometers. The effect of particle size is most critical on slurries of about 55% polyethylene and higher. Slurries of up to about 55% polyethylene are pumpable with any of the commercially available UHMWPE materials.

In addition to the effect of particle size, polydispersity affects the flowability of the slurries. Thus a material of a wide particle size spectrum can be flowable if the low particle size component is sufficiently large.

Other than styrene, the styrene monomers that can be employed in the process and compositions of this invention are ring-substituted alkyl styrenes wherein the alkyl substituent has 1 to about 4 carbons, and the latter are preferred, since they have higher boiling points than ln-substituted styrene. Any of the ring-substituted, 1 to 4 carbon alkyl styrenes can be used. Typical alkyl styrenes which can be employed are o-methyl styrene, p-methyl styrene, o-ethyl styrene, p-butyl styrene, p-isobutyl styrene, m-methyl styrene and m-ethyl styrene. The p-methyl styrene isomer is most preferred.

The other free radical vinyl polymerizable monomer that can replace 10% of the total monomer phase is any such monomer having a boiling point greater than about 130°C, such as acrylic acid, butyl acrylate, and butyl methacrylate.

Reaction time, or cure time, for the polymerization is affected by the amount of catalyst employed according to well known principles. With a preferred catalyst concentration of about 0.5%, based on the weight of UHMWPE plus styrene monomer, cure time is fast enough within the 155 to 165°C temperature range for practical use of the process to prepare shaped articles for high performance specialty polymer applications. Polymerization is usually completed in about 10 to 15 minutes. Increasing or decreasing the catalyst concentration will change the cure time accordingly. A typical cure time for a slurry containing 1% of a peroxide, based on the weight of the monomers, is about 350 seconds.

Increasing or decreasing the catalyst concentration also affects the melting point of the resultant polymer blend and the concentration of residual monomer in the product. Higher levels of catalyst lead to lowering of the melting point; a material made with 0.5% catalyst melts at about 3°C lower than does the same material made with 0.25% catalyst. On the other hand, an increase in catalyst concentration from 0.25 to 0.5% may decrease the residual monomer concentration by as much as 50% or more. This is desirable for economic reasons and also to reduce the unpleasant odor generally associated with styrene monomers.

Since the polymerization of the styrene monomer takes place at about 160°C and higher, and the boiling point of styrene monomer and the methyl styrenes is only 140 to 150°C, a significant amount of monomer may be volatilized off when the mold is closed and the styrene monomer is heated; expansion occurs and some of the volatilized monomer escapes. To alleviate this problem, a small amount of a compatible styrene-soluble elastomer, such as, e.g., styrene-butadiene rubber (SBR), ethylene-propylene-diene rubber or natural rubber can be added. When a more polar vinyl-polymerizable monomer, such as an acrylate, is included in the monomer mix, more-polar elastomers such as styrene-acrylonitrile can be used. The elastomer tends to maintain the slurry viscosity at a higher level as it is heated, making it more difficult for the monomer to volatilize. When leakage does occur, the leaking monomer evaporates and leaves behind a layer of the elastomer which seals the mold against further leakage. Amounts of elastomer up to about 10% by weight, preferably about 2 to 10% based on the weight of the UHMWPE plus styrene monomer, can be used. The presence of the elastomer also contributes to the impact strength of the blends after molding and curing.

The physical properties of the resultant polymer blends vary over the specified concentration ranges. At about a 50/50 concentration of UHMWPE to polystyrene, the properties, i.e., stiffness and impact strength, resemble the properties of a tough polystyrene. The data set forth hereinafter show a trend in which tensile strength and yield strength decrease as the polystyrene content increases, while modulus (stiffness) increases with increasing polystyrene content.

Even if the crosslinking monomer is not included, the gel-swell values of the polymerization product demonstrate that it is, in fact, an interpenetrating, lightly crosslinked polymer network. It is surprising that the material exhibits the qualities of a crosslinked structure since one would ordinarily expect both components to be linear polymers. In particular, the material exhibits impact strength of a magnitude not usually associated with crosslinked polymers. It is believed that light crosslinking occurs as a result of grafting reactions induced by the free radical catalyst.

The alloy compositions of this invention also have a good degree of abrasion resistance. Although this characteristic of the alloys is not as good as that of UHMWPE itself, it is substantially better than that of many other polymers that are employed in the applications for which these alloys are intended.

The property referred to in this application as the Abrasion Index is determined by rotating a disc of the alloy in a 50/50 sand/water slurry at 1750 RPM for fifteen hours. Ratings are expressed by a number corresponding to the percentage of the volume lost by the test disc compared to that lost by a disc of carbon steel of the same size and subjected to the same treatment. The alloys of this invention exhibit Abrasion Index values well below that of carbon steel, i.e., between about 20 and 70. Carbon steel is arbitrarily assigned an Abrasion Index of 100, while the Abrasion Index of UHMWPE is about 10.

Examples 1 thru 3

A solution was prepared comprising 10% by weight of SBR rubber in 4-methyl styrene. The solution was stirred overnight to assure complete dissolution of the rubber. To this solution was added 1% (based on weight of 4-methyl styrene) of t-butyl cumyl peroxide.

To several aliquots of the monomer composition containing rubber and t-butyl cumyl peroxide was added an amount of UHMWPE to form slurries having the 4-methyl styrene/UHMWPE ratios listed in Table 1. The UHMWPE had a particle size such that 85% of the particles were less than 75 micrometers and 30% of such particles were less than 45 micrometers.

The slurry compositions were charged to 12.7 cm (5 in) x 12.7 cm x 0.235 cm (1/4 in) "picture frame" mold, and subjected to 3447 kPa (500 psi) pressure at 160°C for 15 minutes. The resultant plaques, as well as a control plaque of 100% UHMWPE molded under 8273 kPa (1200 psi) pressure for 30 minutes, were subjected to physical testing with the results shown in Table 1. Unless otherwise indicated, the units and conversion factors used are:

Tensile Strength: kPa (psi x 6.985); Tensile Modulus: kPa; Yield Strength: kPa; Elongation: % to break; Notched Izod Impact Strength: J/cm (ft-lbf/in x 1.356/2.54).

Table 1

| Example No. | Composition* | Tensile Strength | Tensile Modulus | Yield Strength | Per Cent Elongation | Notched Izod Impact Strength | Abrasion Index |
|---|---|---|---|---|---|---|---|
| Control | 100% PE** | 38,612 / 5,600 psi | 682,605 / 99,000 | NA (no yield) | 360 | No break | 10 |
| 1 | 60% PE/ 40% styrene*** | 32,406 | 937,584 | 24,133 | 320 | 10.3 (p)‡ | 46 |
| 2 | 53% PE/ 47% styrene | 26,201 | 903,254 | 23,443 | 290 | 10.3 (p) | 77 |
| 3 | 50% PE/ 50% styrene | 25,511 | 985,985 | 24,822 | 280 | 8.49 (p) | 73 |

*ratio of UHMWPE to 4-methyl styrene.
**fine particle: 85% smaller than 75 micrometers.
***4-methyl styrene.
‡(p) indicates partial break.

## Example 4

The procedure of Examples 1 to 3 was repeated using a UHMWPE having a larger particle size wherein most of the particles were greater than 180. Physical properties of plaques prepared from such materials are recorded in Table 2.

The procedure of Examples 1 to 3 was repeated wherein p-t-butyl styrene was substituted for 4-methyl styrene. Physical properties of this product are recorded in Table 3.

Example 5

Table 2

| Example No. | Composition* | Tensile Strength | Tensile Modulus | Yield Strength | Elongation | Notched Izod Impact Strength | Abrasion Index |
|---|---|---|---|---|---|---|---|
| 4 | 60% HiFax/ 40% styrene | 26,281 | 889,455 | 23,443 | 270 | 8.4 (p) | 46 |

*ratio of UHMWPE to 4-methyl styrene.

Table 1

| Example No. | Composition* | Tensile Strength | Tensile Modulus | Yield Strength | Elongation | Notched Izod Impact Strength | Abrasion Index |
|---|---|---|---|---|---|---|---|
| 5 | 60% PE/ 40% t-butyl styrene | 33,786 | 827,400 | 22,064 | 350 | 2.94 (p) | 45 |

*ratio of UHMWPE to 4-methyl styrene.

It will be noted that in this example, impact strength is reduced, though still good enough for many applications. Other physical properties are comparable to those found when 4-methyl styrene is used as the monomer.

Examples 6 to 11

The procedure used in Examples 1 to 3 was repeated except that a second vinyl polymerizable monomer was added to the 4-methyl styrene monomer. The elastomer employed was nitrile rubber (Hycar 1051 from BF Goodrich Co.) present to the extent of 10% by weight of the 4-methyl styrene. Polymerization was effected with t-butyl cumyl peroxide as a catalyst at 160° C for 20 minutes. Impact strength of these materials is recorded in Table 4.

7

## Table 4

| Example No. | Composition* | Impact Strength (J/cm) | Abrasion Index |
|---|---|---|---|
| 6 | 60% PE**/32% styrene 8% butylacrylate | 6.10 | 52 |
| 7 | 60% PE/32% styrene 8% butylmethacrylate | 3.26 | 50 |
| 8 | 60% PE/37% styrene 3% acrylic acid | 1.89 | 49 |
| Control | 60% PE/40% styrene | 1.40 | 51 |
| Control | 45% PE/55% styrene | 0.43 | 95 |
| 9 | 45% PE/47% styrene 8% butylacrylate | 0.68 | 81 |
| 10 | 45% PE/47% 4-methyl-styrene 8% butylmethacrylate | 0.46 | 102 |
| 11 | 45% PE/52% 4-methyl-styrene 3% acrylic acid | 0.37 | 91 |

*ratio of UHMWPE to 4-methyl styrene.
**fine particle:  85% smaller than 75μm.

Examples 12 to 21

A series of reaction mixtures comprised of 4-methyl styrene containing 10 wt. % SBR and UHMWPE in various ratios were prepared. Each contained about 1.0 wt. %, based on the styrene content, of t-butyl cumyl peroxide as a vinyl polymerization catalyst. For each ratio of 4-methyl styrene to UHMWE, one mix included about 2 wt. % (based on weight of 4-methyl styrene) of divinyl benzene (DVB) and the control mix did not.

When the mixture was thoroughly mixed, the resulting slurry was poured into a 12.7 cm x 12.7 cm x 0.235 cm plaque mold at room temperature. The filled mold was transferred to a press heated to a temperature between about 150 and 170°C and subjected to 2,069 to 3,447 kPa (300 to 500 psi) pressure. The filled mold is held under these conditions for about 10 to 15 minutes until cured by polymerization and crosslinking of the 4-methyl styrene phase.

Table 5 sets forth the Impact Strength and Abrasion Index of the samples prepared for Examples 12 to 21.

8

## Table 5

| Example No. | UHMWPE Content | Impact Strength*** J/cm | Abrasion Index |
|---|---|---|---|
| Control 12 | 60 wt. % | 8.38 HiFax 1900* | 44 |
| Ex. 12 | 60 wt. % | 9.66 HiFax 1900 | 43 |
| Control 13 | 53 wt. % | 3.74 HiFax 1900 | |
| Ex. 13 | 53 wt. % | 9.13 HiFax 1900 | |
| Ex. 14 | 50 wt. % | 15.11 HiFax 1900 | 71 |
| Control 15 | 45 wt. % | 1.38 HiFax 1900 | 73 |
| Ex. 15 | 45 wt. % | 8.11 HiFax 1900 | 78 |
| Control 16 | 40 wt. % | 0.48 HiFax 1900 | 113 |
| Ex. 16 | 40 wt. % | 5.07 HiFax 1900 | 119 |
| Control 17 | 60 wt. % | 10.25 GUR 403F** | 45 |
| Ex. 17 | 60 wt. % | 10.04 GUR 403F | 39 |
| Control 18 | 53 wt. % | 10.25 GUR 403F | 74 |
| Ex. 18 | 53 wt. % | 9.39 GUR 403F | 60 |
| Control 19 | 50 wt. % | 8.49 GUR 403F | 69 |
| Ex. 19 | 50 wt. % | 9.07 GUR 403F | 74 |

\* HiFax 1900 from HIMONT Inc., Wilmington, Delaware (75-200 $\mu$m particle size).

\*\* GUR 403F from Hoechst Celanese Corp. (25-75 particle size).

\*\*\* Notched Izod Impact Strength; samples did not break completely.

## Table 5(Cont'd)

| Example No. | UHMWPE Content | Impact Strength J/cm | Abrasion Index |
|---|---|---|---|
| Control 20 | 45 wt. % | 2.40 GUR 403F | 109 |
| Ex. 20 | 45 wt. % | 8.38 GUR 403F | 115 |
| Control 21 | 40 wt. % | 1.65 GUR 403F | 122 |
| Ex. 21 | 40 wt. % | 7.15 GUR 403F | 117 |

From the data of Examples 12 through 21, it can be seen that crosslinking of the styrene phase has a definite beneficial effect on the impact strength of the compositions.

The data show that the degree of improvement of impact strength is greater at lower levels of polystyrene content. Referring to Example 16, it can be seen that crosslinking the polystyrene phase increases the impact strength from 0.48 J/cm (0.9 ft lbf/in) and 5.07 J/cm (9.5 ft lbf/inch) i.e., an increase of greater than 900%. Referring to Example 12, the increase is only 15%. These data demonstrate that the upper limit of impact improvement occurs at about 55% crosslinked polystyrene.

Examples 22 and 23

Test plaques were prepared in similar fashion to Example 12 to 21 for tensile testing. The results are recorded in Table 6.

## Table 6

| Example No. | Composition | Tensile Strength | Tensile Modulus | Elongation at Break |
|---|---|---|---|---|
| Control 22 | 40 wt. % GUR 403F | 28,269 | 1,103,161 | 310% |
| Ex. 22 | 40 wt. % GUR 403F | 30,338 | 1,137,635 | 190% |
| Control 23 | 30 wt. % GUR 403F | 26,890 | 1,213,520 | 20% |
| Ex. 23 | 30 wt. % GUR 403F (2% DVB) | 29,648 | 1,234,205 | 80% |

Example 24

In this example 40% by weight GUR 403F UHMWPE was employed and 8% by weight of the 4-methyl styrene phase was replaced by phenyl acrylate and 2% trimethylolpropane trimethacrylate (TMPTMA) based on 4-methyl styrene was employed as the crosslinker. The Notched Izod Impact Strength was 7.63 J/cm (14.3 ft lbf/in) when the TMPTMA was used and 3.15 J/cm (5.9 ft lbf/inch) when the TMPTMA was absent.

It will be noted that the impact strength of these materials is better than the corresponding material shown in Example 21.

Example 25

A series of polymerizations were carried out wherein the concentration of crosslinker (DVB in this case) was varied. In these experiments, the UHMWPE content was 40% GUR 403F and rubber was Stereon 730A, a SBR rubber, which is not as readily miscible with styrene as was the SBR employed in previous examples. Properties of these materials are recorded in Table 7.

## Table 7

| DVB Concentration | Impact Strength | % Swell |
|---|---|---|
| 1% | 2.66 | 287 |
| 2% | 3.47 | 238 |
| 4% | 4.96 | 214 |
| 8% | 3.58 | 167 |

From the above, it will be noted that impact strength appears to peak at about 4% of the crosslinking. This is consistent with other known crosslinked systems where impact strength decreases at higher levels of crosslinking. The overall level of impact strength is lower for these examples than in, e.g., Example 21, due to the reduced miscibility of the rubber employed in these runs.

Examples 26 to 29

Using the procedures substantially as described for Examples 12 through 21, a series of polymerizations were carried out using 4-methyl styrene and crosslinkers other than DVB. Here again significant improvements in impact strength were observed compared to the controls reported in Table 1 above. Impact strengths of these polymers are reported In Table 8.

## Table 8

| Example No. | Composition | Crosslinker | Wt. % Cross-linker | Impact Strength J/cm |
|---|---|---|---|---|
| 26 UHMWPE | 40 wt. % | TEGDM* | 2 | 4.91 |
| 27 UHMWPE | 40 wt. % | TEGDM | 4 | 6.41 |
| 28 UHMWPE | 40 wt. % | TMPTMA** | 2 | 3.15 |
| 29 UHMWPE | 40 wt. % | di-isopropenyl benzene | 2 | 5.71 |

* triethyleneglycol dimethacrylate
** trimethylolpropane trimethacrylate

The Fluid mixtures of UHMWPE and styrene monomer can be processed by various liquid molding techniques such as reaction injection molding (RIM), resin transfer molding (RTM), and pultrusion. The curing time can be adjusted to suit the particle processing technique by appropriate selection of the molding temperature. In addition, the products can be used as matrix resins for various types of composites using glass or other fibrous reinforcements.

Examples 30 to 33

To show the effect of the elastomer on impact strength, examples were run with and without rubber following the procedures of Example 12 to 21. Results are recorded in Table 9. The elastomer employed was SBR.

## Table 9

| Example No. | UHMWPE Conc. | Rubber Conc. | Impact Strength J/cm | Abrasion Index |
|---|---|---|---|---|
| 30 | 40% | 0 | 0.59 | 173 |
| 31 | 40% | 10 | 7.15 | 117 |
| 32 | 60% | 0 | 10.25 | 32 |
| 33 | 60% | 10 | 10.14 | 39 |

Examples 34 to 38

To demonstrate the effect of increasing crosslinker concentration on the curing rate of the styrene/UHMWPE systems, a series of runs were carried out at varying crosslinker concentration. Poly-

EP 0 453 999 A2

merizations were carried out as in Examples 12 to 21. All formulations contain 10% SBR rubber and divinyl benzene as crosslinker. Results are recorded in Table 10.

<div align="center">

## Table 10

| Example No. | Cat. Con. | DVB | Cure Time (sec.) |
|:---:|:---:|:---:|:---:|
| 34 | 1.5%* | 2% | 200 |
| 35 | 1.6%* | 12% | 150 |
| 36 | 1.6%** | 24% | 80 |
| 37 | 1.6%** | 36% | 70 |
| 38 | 1.5%* | 50% | 60 |

</div>

*Catalyst is mixture of equal parts benzoylperoxide, 1,1-di-t-butyl peroxy-3,5,5-tri-methyl cyclohexane and t-butyl-perbenzoate.

**Catalyst is 50/50 mixture of 1,1-di-t-butyl peroxy-3,5,5-trimethyl cyclohexane and t-butyl perbenzoate.

Examples 39 to 41

A solution of SBR rubber in 4-methyl styrene was prepared as for Examples 1-3. Divinyl benzene and equal amounts of the peroxides, t-butyl peroxybenzoate and 1,1-di-t-butylperoxy-3,3,5-trimethyl cyclohexane were added. The resulting solution was stirred for one hour. This styrene solution was added to a blended mixture of UHMWPE (33 wt. % Gur 402F, 67 wt. % HiFax 1900) in a cooled Prodex Henschell mill. The liquid was added over a thirty minute time period and mixing was maintained for an additional two minutes. The composition of the blends are given in the Table below. Samples for physical testing were prepared by a commercial transfer molding technique. Thirty seven to forty grams of material was fed to the pot for transfer to the mold. The pot temperature was maintained at 121 to 127°C (250-260°F), the mold at 149°C (300°F). The mold clamping force was 597.8 kN (60 tonf), the cure time was four minutes. The physical properties of these specimens are listed below.

## COMPOSITION OF SAMPLES, wt.%

| | Example 39 | Example 40 | Example 41 |
|---|---|---|---|
| UHMWPE | 70 | 75 | 79 |
| 4-methyl styrene, SBR | 26 | 22 | 18 |
| divinyl benzene | 3.6 | 3.0 | 2.5 |
| peroxides | 0.48 | 0.40 | 0.34 |

## PHYSICAL PROPERTIES OF TRANSFER MOLDED SPECIMENS

| Example Number | Strength psi | Strength MPa | Modulus psi | Modulus MPa | Yield | Elong. % | Abrasion Index |
|---|---|---|---|---|---|---|---|
| 39 | 2700 | 19 | 138000 | 951 | None | 39 | 26 |
| 40 | 2700 | 19 | 131000 | 903 | None | 34 | 22 |
| 41 | 2600 | 18 | 120000 | 827 | None | 25 | 20 |

## Claims

1. A method for making molded articles comprising ultra-high-molecular-weight polyethylene (UHMWPE), that includes the steps of mixing particulate UHMWPE with a liquid styrene monomer, charging the mixture into a heated mold, and polymerizing the monomer, characterized in that the mixture is a dispersion of 35 to 80% of particles of UHMWPE in in the styrene monomer, and also contains a catalytic amount of a free radical vinyl polymerization catalyst, and the mold is heated to a temperature sufficient to cause the UHMWPE to dissolve in said monomer and then to cause the styrene monomer to polymerize to a solid polymer.

2. A method for making molded articles as claimed in claim 1, further characterized in that the heating of the mold is carried out in two steps, the first to a temperature at which the UHMWPE dissolves in the styrene monomer to form a gel as indicated by an endotherm indication on a colorimetric scan curve, and the second to a higher temperature at which polymerization of the styrene monomer is initiated.

3. A method for making molded articles as claimed in claim 1 or 2, further characterized in that the mold is first heated to 120 to 125°C and then to 155 to 165°C.

4. A method for making molded articles as claimed in claim 1, 2, or 3, further characterized in that the dispersion of UHMWPE in the styrene monomer includes 20 to 65% of liquid monomer comprising styrene monomer and up to about 10% based on the weight of the total monomer of at least one free radical vinyl polymerizable monomer.

5. A method for making molded articles as claimed in any one of the preceding claims, further characterized in that the mixture also contains a crosslinking monomer that has more than one point of free-radical-polymerizable vinyl unsaturation in a molecule.

6. A method for making molded articles as claimed in any one of the preceding claims, further characterized in that the styrene monomer is 4-methyl styrene.

7. A method for making molded articles as claimed in any one of the preceding claims, further characterized in that the free radical vinyl polymerizable monomer is butyl methacrylate.